# EUROPÄISCHE PATENTSCHRIFT

(11) **EP 3 215 761 B1**
(45) Veröffentlichungstag und Bekanntmachung des Hinweises auf die Patenterteilung: **12.12.2018**
(21) Anmeldenummer: 15797615.0
(22) Anmeldetag: 02.11.2015
(51) Int. Cl.: F16H 25/18

(54) **LINEARAKTUATOR**
LINEAR ACTUATOR
ACTUATEUR LINÉAIRE

(30) Priorität: 03.11.2014 DE 102014222413
(43) Veröffentlichungstag der Anmeldung: 13.09.2017
(73) Patentinhaber: Continental Automotive GmbH, 30165 Hannover (DE)
(72) Erfinder: WEIS, Christian, 55257 Budenheim (DE); MIKOLAJEK, Carsten, 64347 Griesheim (DE)
(86) Internationale Anmeldenummer: PCT/EP2015/075460
(87) Internationale Veröffentlichungsnummer: WO 2016/071276

(56) Entgegenhaltungen:
- WO-A1-2015/055548
- DE-A1-102008 000 346
- FR-A1- 2 096 472
- KR-A- 20100 042 779
- US-A- 3 344 685
- US-A- 3 374 684
- US-A1- 2006 213 292

## Beschreibung

Die Erfindung betrifft einen Linearaktuator zum Antrieb eines Stellgliedes insbesondere für eine Brennkraftmaschine eines Kraftfahrzeuges, mit einer drehbaren Antriebswelle und einem axial verschieblichen Stößel zur Verstellung des Stellgliedes, mit einer von der Antriebswelle um eine Drehachse angetriebenen Führungskurve und mit einem die Führungskurve abtastenden Führungsglied, wobei das Führungsglied zwei Tastkörper hat und die Tastkörper gegen einander gegenüberliegende Seiten der Führungskurve vorgespannt sind. DE 10 2008 000346 beschreibt einen solchen Linearaktuator.

Solche Linearaktuatoren werden beispielsweise von Abgasrückführventilen bei Brennkraftmaschinen heutiger Kraftfahrzeuge eingesetzt. Die Vorspannung zweier Tastkörper gegen einander gegenüberliegende Seiten der Führungskurve dient dazu, einen spielfreien Antrieb des Stößels zu gewährleisten. Der Vorteil des bekannten Linearaktuators ist, dass sich die Führungskurve nahezu beliebig gestalten lässt und beispielsweise nichtlineare Kennlinien zwischen Drehwinkel der Antriebswelle und Stellweg des Stößels erzeugen lassen.

Jedoch besteht insbesondere bei nicht linearen Kennlinien das Problem, dass unerwünschte Reaktionskräfte zwischen den Tastkörpern und der Führungskurve auftreten. Diese Reaktionskräfte müssen von einem Federelement aufgenommen werden, welches die Tastkörper gegen die gegenüberliegenden Seiten der Führungskurve vorspannt. Die Reaktionskräfte und die Federkräfte führen zu mechanischen Belastungen und ungleichmäßigen Kraft-Weg-Kennlinien des Linearaktuators und sind damit unerwünscht.

Der Erfindung liegt das Problem zugrunde, einen Linearaktuator der eingangs genannten Art so weiter zu bilden, dass er unerwünschte Reaktionskräfte vermeidet.

Dieses Problem wird erfindungsgemäß dadurch gelöst, dass die Breite der Führungskurve variabel gestaltet ist und dass die Führungskurve auf einer sich über einen Teilkreis erstreckende Scheibe angeordnet ist, dass die Scheibe auf ihren Umfang einen Teilzahnkranz aufweist und dass ein von der Antriebswelle angetriebenes Ritzel den Teilzahnkranz kämmt und dass die Tastkörper mit dem Stößel eines Ventilkörpers verbindbar sind.

Durch diese Gestaltung lässt sich eine spielfreie Führung des Stößels auch bei nicht linearen Kennlinien ermöglichen. Eine gleichmäßige Kraft-Weg-Kennlinie lässt sich durch die entsprechende Gestaltung der Breite der Führungskurve erreichen. Nahe der Drehachse kann dank der Erfindung eine andere Breite der Führungskurve vorgesehen sein als von der Drehachse entfernt. Damit kann der Linearaktuator eine progressive Kennlinie des Drehwinkels der Drehachse zum Stellweg des Stößels aufweisen. Die Kräfte an der Antriebswelle bleiben über den Drehwinkel konstant. Die Breite der Führungskurve wird so ausgelegt, dass über den gesamten Drehwinkel der Drehachse der Abstand der Tastkörper und damit auch die Vorspannkräfte immer konstant bleiben. Damit werden unerwünschte Reaktionskräfte vermieden.

Besonders gleichmäßige Kraft-Weg-Kennlinien lassen sich gemäß einer anderen vorteilhaften Weiterbildung der Erfindung einfach erreichen, wenn die Breite der Führungskurve kontinuierlich über den gesamten Stellweg des Stößels verändernd gestaltet ist.

Zur weiteren Vergleichmäßigung der Kraft-Weg-Kennlinie trägt es gemäß einer anderen vorteilhaften Weiterbildung der Erfindung bei, wenn die Führungskurve in einem nahe der Drehachse angeordneten Abschnitt schmaler ist als in einem von der Drehachse entfernten Abschnitt. Vorzugsweise beträgt die Differenz der Breite der Abschnitte der Führungskurve ungefähr 0,1 bis 0,2 mm.

Trifft eine Verbindungslinie der Tastkörper genau auf die Drehachse, werden beim Antrieb der Antriebswelle Querkräfte erzeugt, die auf den Stößel übertragen werden. Solche Querkräfte lassen sich gemäß einer anderen vorteilhaften Weiterbildung der Erfindung einfach vermeiden, wenn eine Verbindungslinie der Tastkörper zur Drehachse versetzt ist. Vorzugsweise beträgt der Versatz der Verbindungslinie ungefähr 1mm.

Ein beispielsweise durch Temperaturschwankungen hervorgerufenes Spiel der Tastkörper an der Führungskurve beim Antrieb des Stößels lässt sich gemäß einer anderen vorteilhaften Weiterbildung der Erfindung einfach vermeiden, wenn das Führungsglied ein Federelement zur Vorspannung der Tastkörper aufeinander zu oder voneinander weg hat.

Die Führungskurve könnte beispielsweise als Nut ausgebildet sein und die Tastkörper gegen die Wandung der Nut vorgespannt werden. Dies erfordert jedoch entweder eine besonders breite Nut oder sehr kleine Tastkörper. Bei Stellgliedern für Bauteile einer Brennkraftmaschine ist jedoch der Bauraum sehr begrenzt. Insbesondere für Brennkraftmaschinen von Kraftfahrzeugen vorgesehene Linearaktuatoren weisen jedoch eine besonders hohe Stabilität bei einem begrenzten Bauraum auf, wenn die Führungskurve eine hervorstehende Rippe hat und wenn die Tastkörper an einander gegenüberstehenden Seiten der Rippe anliegen.

Seitliche Belastungen und Kippmomente im Linearaktuator lassen sich gemäß einer anderen vorteilhaften Weiterbildung der Erfindung besonders gering halten, wenn die Tastkörper jeweils ein Wälzlager aufweisen.

Eine vorgesehene Übersetzung des Linearaktuators lässt sich gemäß der Erfindung einfach einstellen, wenn die Führungskurve auf einer sich über einen Teilkreis erstreckende Scheibe angeordnet ist, wenn die Scheibe auf ihren Umfang einen Teilzahnkranz aufweist und wenn ein von der Antriebswelle angetriebenes Ritzel den Teilzahnkranz kämmt und wenn die Tastkörper mit dem Stößel eines Ventilkörpers verbindbar sind.

Der Linearaktuator gestaltet sich gemäß einer anderen vorteilhaften Weiterbildung der Erfindung konstruktiv besonders einfach, wenn das Federelement als bügelförmiges, die beiden Tastkörper miteinander verbindendes Federblech gestaltet ist.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in:
- Fig. 1: schematisch einen Linearaktuator mit angrenzenden Bauteilen eines Stellgliedes,
- Fig. 2: eine vergrößerte perspektivische Darstellung des Linearaktuators aus Figur 1,
- Fig. 3: den Linearaktuator aus Figur 1 in einer Schnittdarstellung durch das Führungsglied,
- Fig. 4: eine Kennlinie des Linearaktuators aus Figur 1.

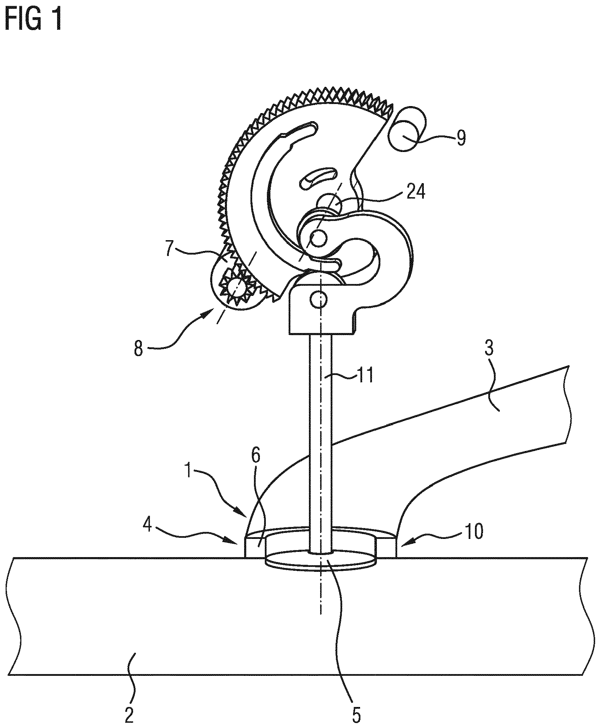

Figur 1 zeigt ein Abgasrückführungsventil 1 eines Kraftfahrzeuges mit einem Abgaskanal 2 und einem Rückführungskanal 3. Das Abgasrückführungsventil 1 hat ein Stellglied 4 mit einem Ventilkörper 5 und einen Ventilsitz 6. Ein von einem Elektromotor 7 angetriebener Linearaktuator 8 dient zum Antrieb des Stellgliedes 4. Der Linearaktuator 8 hat einen festen Anschlag 9 und einen zweiten, weichen Anschlag 10. Der zweite Anschlag 10 ist von dem Ventilsitz 6 gebildet, an dem der Ventilkörper 5 anliegt. Der Linearaktuator 8 hat einen Stößel 11 zum Antrieb des Ventilkörpers 5.

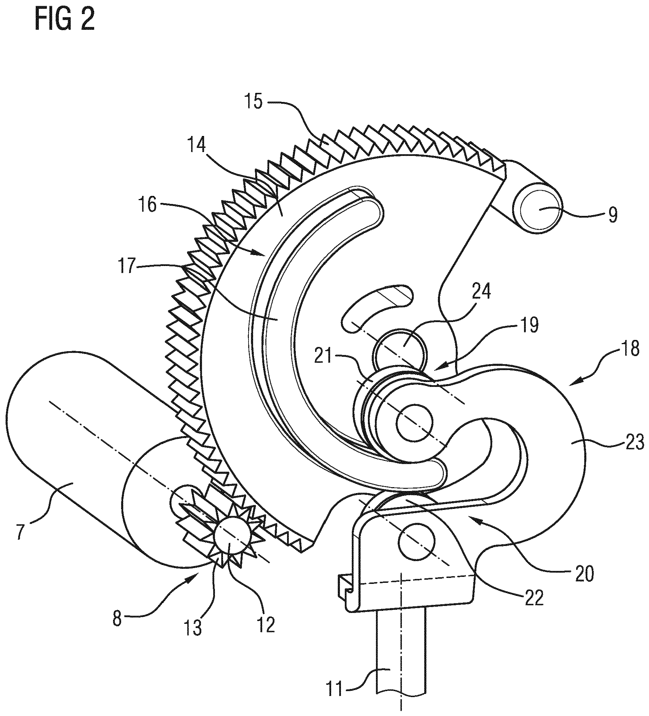

Figur 2 zeigt perspektivisch und vergrößert den Linearaktuator 8 aus Figur 1. Hierbei ist zu erkennen, dass der Elektromotor 7 eine Antriebswelle 12 mit einem Ritzel 13 antreibt. Der Linearaktuator 8 hat eine sich über einen Teilkreis erstreckende Scheibe 14 mit einem auf dem Umfang angeordneten Teilzahnkranz 15. Die Scheibe ist um eine Drehachse 24 drehbar gelagert. Das Ritzel 13 treibt über den Teilzahnkranz 15 die Scheibe 14 an. Auf der Scheibe 14 ist eine Führungskurve 16 mit einer Rippe 17 angeordnet. Ein die Führungskurve 16 abtastendes Führungsglied 18 hat zwei einander gegenüberstehende Tastkörper 19, 20. Die Tastkörper 19, 20 weisen jeweils ein als Kugellager ausgebildetes Wälzlager 21, 22 auf und sind über ein Federelement 23 miteinander verbunden. Das Federelement 23 ist bügelförmig gestaltet und aus Federstahl gefertigt. Weiterhin ist das Federelement 23 mit dem Stößel 11 verbunden.

Durch Drehung der Scheibe 14 um die Drehachse 24 mittels Antrieb des Elektomotors 7 rollen die Wälzlager 21, 22 der Tastkörper 19, 20 auf der Rippe 17 der Führungskurve 16 ab. Dabei wird das Führungsglied 18 entsprechend der Form der Führungskurve 16 auf und nieder bewegt. Diese Bewegung wird über den Stößel 11 auf den Ventilkörper 5 übertragen, welcher schließlich das Abgasrückführungsventil 1 öffnet oder schließt.

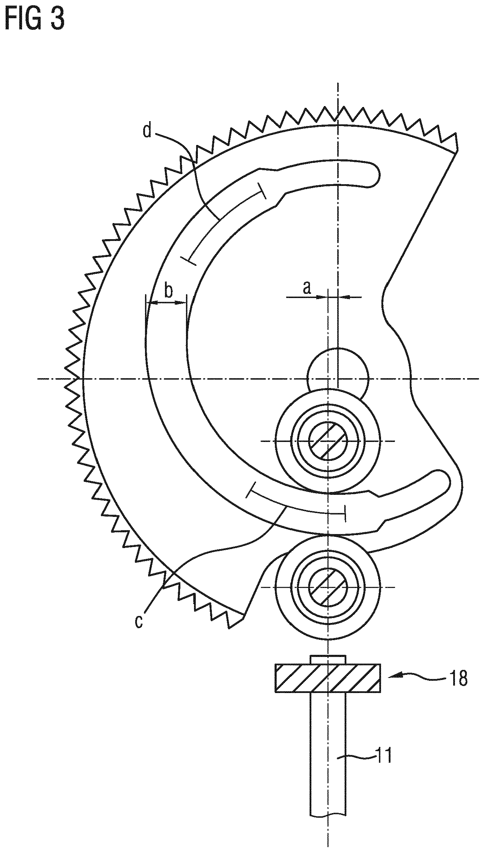

Figur 3 zeigt den Linearaktuator 8 in einer Schnittdarstellung durch das Führungsglied 18. Durch die Schnittdarstellung ist das die Tastkörper 19, 20 mit dem Stößel 11 verbindende Federelement 23 aus Figur 2 nicht dargestellt. Hierbei ist zu erkennen. dass der Stößel 11 mit Berührpunkten der beiden Tastkörper

Führungskurve 16. Die Drehachse hat damit einen Versatz a zur Verbindungslinie der Tastkörper 19, 20. Damit hat auch der Stößel 11 den gleichen Versatz a zur Drehachse 24 der Rippe 17. Die Breite b der Rippe 17 verringert sich kontinuierlich über den gesamten Stellweg des Stößels 11. Hierzu hat die Führungskurve 16 einen nahe der Drehachse 24 angeordneten Abschnitt c und einen der Drehachse 24 fernen Abschnitt d. Die Rippe 17 ist in dem nahe der Drehachse 24 angeordneten Abschnitt c schmaler als in einem von der Drehachse 24 entfernten Abschnitt d.

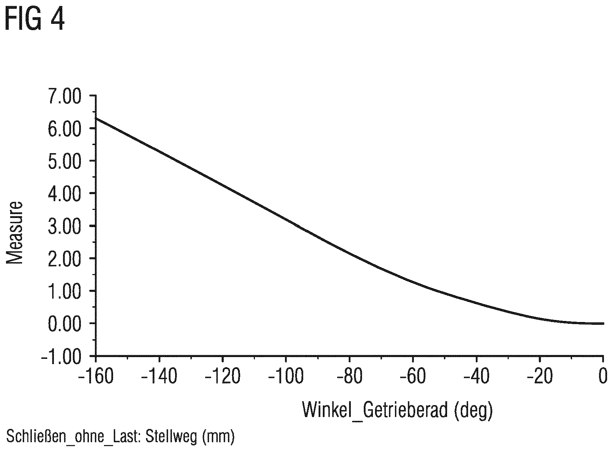

Figur 4 zeigt zur Verdeutlichung eine progressive Kennlinie des Stellwegs des Stößels 11 über den Drehwinkel der Drehachse 24.

## Patentansprüche

1. Linearaktuator (8) zum Antrieb eines Stellgliedes (4) insbesondere für eine Brennkraftmaschine eines Kraftfahrzeuges, mit einer drehbaren Antriebswelle (12) und einem axial verschieblichen Stößel (11) zur Verstellung des Stellgliedes (4), mit einer von der Antriebswelle (12) um eine Drehachse (24) angetriebenen Führungskurve (16) und mit einem die Führungskurve (16) abtastenden Führungsglied (18), wobei das Führungsglied (18) zwei Tastkörper (19, 20) hat und die Tastkörper (19, 20) gegen einander gegenüberliegende Seiten der Führungskurve (16) vorgespannt sind, **dadurch gekennzeichnet, dass** die Breite (b) der Führungskurve (16) variabel gestaltet ist, und dass die Führungskurve (16) auf einer sich über einen Teilkreis erstreckende Scheibe (14) angeordnet ist, dass die Scheibe (14) auf ihren Umfang einen Teilzahnkranz (15) aufweist und dass ein von der Antriebswelle (12) angetriebenes Ritzel (13) den Teilzahnkranz (15) kämmt und dass die Tastkörper (19, 20) mit dem Stößel (11) eines Ventilkörpers (5) verbindbar sind.

2. Linearaktuator nach Anspruch 1, **dadurch gekennzeichnet, dass** die Breite (b) der Führungskurve (16) kontinuierlich über den gesamten Stellweg des Stößels (11) verändernd gestaltet ist.

3. Linearaktuator nach Anspruch 1 oder 2, **dadurch gekennzeichnet, dass** die Führungskurve (16) in einem nahe der Drehachse (24) angeordneten Abschnitt (c) schmaler ist als in einem von der Drehachse (24) entfernten Abschnitt (d).

4. Linearaktuator nach einem der Ansprüche 1 bis 3, **dadurch gekennzeichnet, dass** eine Verbindungslinie der Tastkörper (19, 20) zur der Drehachse (24) versetzt ist.

5. Linearaktuator nach einem der Ansprüche 1 bis 4, **dadurch gekennzeichnet, dass** das Führungsglied (18) ein Federelement (23) zur Vorspannung der Tastkörper (19, 20) aufeinander zu oder voneinander weg hat.

6. Linearaktuator nach einem der Ansprüche 1 bis 5, **dadurch gekennzeichnet, dass** die Führungskurve (16) eine hervorstehende Rippe (17) hat und dass die Tastkörper (19, 20) an einander gegenüberstehenden Seiten der Rippe (17) anliegen.

7. Linearaktuator nach einem der Ansprüche 1 bis 6, **dadurch gekennzeichnet, dass** die Tastkörper (19, 20) jeweils ein Wälzlager (21, 22) aufweisen.

8. Linearaktuator nach einem der Ansprüche 5 bis 7, **dadurch gekennzeichnet, dass** das Federelement (23) als bügelförmiges, die beiden Tastkörper (19, 20) miteinander verbindendes Federblech gestaltet ist.

## Claims

1. Linear actuator (8) for driving an actuating member (4), in particular for an internal combustion engine of a motor vehicle, with a rotatable drive shaft (12) and an axially displaceable ram (11) for adjusting the actuating member (4), with a guide curve (16) driven by the drive shaft (12) about a rotary axis (24) and with a guide member (18) scanning the guide curve (16), wherein the guide member (18) has two sensing bodies (19, 20) and the sensing bodies (19, 20) are pretensioned against opposite sides of the guide curve (16), **characterized in that** the width (b) of the guide curve (16) is configured so as to be variable, and **in that** the guide curve (16) is arranged on a disc (14) extending over a part circle, **in that** the disc (14) has a partial toothed rim (15) on its periphery and **in that** a pinion (13) driven by the drive shaft (12) meshes with the partial toothed rim (15), and **in that** the sensing bodies (19, 20) can be connected to the ram (11) of a valve body (5).

2. Linear actuator according to Claim 1, **characterized in that** the width (b) of the guide curve (16) is configured so as to change continuously over the entire travel of the ram (11).

3. Linear actuator according to Claim 1 or 2, **characterized in that** the guide curve (16) is narrower in a portion (c) arranged close to the rotary axis (24) than in a portion (d) remote from the rotary axis (24).

4. Linear actuator according to any of Claims 1 to 3, **characterized in that** a connecting line of the sensing bodies (19, 20) is offset relative to the rotary axis (24).

5. Linear actuator according to any of Claims 1 to 4, **characterized in that** the guide member (18) has a spring element (23) for pretensioning the sensing bodies (19, 20) towards each other or away from each other.

6. Linear actuator according to any of Claims 1 to 5, **characterized in that** the guide curve (16) has a protruding rib (17) and that the sensing bodies (19, 20) lie against opposite sides of the rib (17).

7. Linear actuator according to any of Claims 1 to 6, **characterized in that** the sensing bodies (19, 20) each comprise a roller bearing (21, 22).

8. Linear actuator according to any of Claims 5 to 7, **characterized in that** the spring element (23) is configured as a stirrup-shaped spring plate connecting the two sensing bodies (19, 20) together.

## Revendications

1. Actionneur linéaire (8) pour l'entraînement d'un organe de commande (4), en particulier pour un moteur à combustion interne de véhicule automobile, comprenant un arbre d'entraînement rotatif (12) et un poussoir (11) déplaçable axialement pour le réglage de l'organe de commande (4), une came de guidage (16) entraînée par l'arbre d'entraînement (12) autour d'un axe de rotation (24) et un organe de guidage (18) balayant la came de guidage (16), l'organe de guidage (18) présentant deux corps de balayage (19, 20) et les corps de balayage (19, 20) étant précontraints contre des côtés opposés de la came de guidage (16), **caractérisé en ce que** la largeur (b) de la came de guidage (16) est configurée sous forme variable, et **en ce que** la came de guidage (16) est disposée sur un disque (14) s'étendant sur un cercle partiel, **en ce que** le disque (14) présente, sur sa périphérie, une couronne dentée partielle (15) et **en ce qu'**un pignon (13) entraîné par l'arbre d'entraînement (12) s'engrène avec la couronne dentée partielle (15) et **en ce que** les corps de balayage (19, 20) peuvent être connectés au poussoir (11) d'un corps de soupape (5).

2. Actionneur linéaire selon la revendication 1, **caractérisé en ce que** la largeur (b) de la came de guidage (16) est configurée de manière à varier en continu sur toute la course de réglage du poussoir (11).

3. Actionneur linéaire selon la revendication 1 ou 2, **caractérisé en ce que** la came de guidage (16) est plus étroite dans une portion (c) disposée à proximité de l'axe de rotation (24) que dans une portion (d) éloignée de l'axe de rotation (24).

4. Actionneur linéaire selon l'une quelconque des revendications 1 à 3, **caractérisé en ce qu'**une ligne de connexion des corps de balayage (19, 20) à l'axe de rotation (24) est décalée.

5. Actionneur linéaire selon l'une quelconque des revendications 1 à 4, **caractérisé en ce que** l'organe de guidage (18) présente un élément de ressort (23) pour précontraindre les corps de balayage (19, 20) l'un vers l'autre ou à l'écart l'un de l'autre.

6. Actionneur linéaire selon l'une quelconque des revendications 1 à 5, **caractérisé en ce que** la came de guidage (16) présente une nervure saillante (17) et **en ce que** les corps de balayage (19, 20) s'appliquent contre des côtés opposés l'un de l'autre de la nervure (17).

7. Actionneur linéaire selon l'une quelconque des revendications 1 à 6, **caractérisé en ce que** les corps de balayage (19, 20) présentent à chaque fois un palier à roulement (21, 22).

8. Actionneur linéaire selon l'une quelconque des revendications 5 à 7, **caractérisé en ce que** l'élément de ressort (23) est réalisé sous forme de tôle à ressort en forme d'étrier, reliant l'un à l'autre les deux corps de balayage (19, 20).
